Europäisches Patentamt

(19) European Patent Office

Office européen des brevets

(11) Publication number: **0 227 476**
**B1**

(12) **EUROPEAN PATENT SPECIFICATION**

(45) Date of publication of the patent specification:
26.07.89

(21) Application number: **86310100.2**

(22) Date of filing: **23.12.86**

(51) Int. Cl.⁴: **F02B 37/12**

(54) Turbocharger system with electronic control.

(30) Priority: **24.12.85 US 813114**

(43) Date of publication of application:
**01.07.87 Bulletin 87/27**

(45) Publication of the grant of the patent:
**26.07.89 Bulletin 89/30**

(84) Designated Contracting States:
**AT BE DE ES FR GB IT NL SE**

(56) References cited:
**EP-A- 0 046 872**
**US-A- 1 508 731**

**PATENTS ABSTRACTS OF JAPAN, vol. 6,**
**no. 193 (M-160)[1071], 2nd October 1982; &**
**JP-A-57 99 234 (HITACHI SEISAKUSHO K.K.) 19-06-1982**
**PATENTS ABSTRACTS OF JAPAN, vol. 10,**
**no. 62 (M-460)[2119], 12th March 1986; &**
**JP-A-60 206 935 (NISSAN JIDOSHA K.K.) 18-10-1985**
**PATENTS ABSTRACTS OF JAPAN, vol. 8,**
**no. 230 (M-333)[1667], 23rd October 1984; &**
**JP-A-59 110 839 (MITSUBISHI DENKI K.K.) 26-06-1984**

(73) Proprietor: **ALLIED-SIGNAL INC. (a Delaware corporation), Columbia Road and Park Avenue P.O. Box 2245R, Morristown New Jersey 07960(US)**

(72) Inventor: **Elpern, G. David, 848 West Chester Place, Los Angeles California 90005(US)**

(74) Representative: **Rees, David Christopher et al, Kilburn & Strode 30 John Street, London WC1N 2DD(GB)**

ACTORUM AG

## Description

This invention relates to turbochargers for relatively high pressure charge air to an internal combustion engine. More particularly, this invention relates to an improved electronically responsive control for adjusting wastegate valve position to control turbocharger operation.

Turbochargers are well known in the prior art, and typically comprise a turbine wheel and a compressor wheel mounted on a common shaft and carried within a appropriate housing. The housing adjacent the turbine wheel includes a gas inlet and a gas outlet, and is coupled to the engine exhaust gas manifold for circulation of the exhaust gas through the turbine engine housing to drive the turbine wheel. In turn, the turbine wheel rotatably drives the compressor wheel which compresses ambient air and supplies pressurised air to the intake manifold of the engine.

The use of tubochargers is highly advantageous when compared with conventional naturally aspirated engines in that substantially higher density fuel air mixtures may be delivered to the engine cylinders. This increased fuel air density results in substantially improved engine performance and efficiency. Turbocharger controls are typically included, for example, to limit the boost pressure of pressurised air delivered to the engine intake manifold.

One type of turbocharger control typically comprises a valved apparatus, commonly referred to as a wastegate valve for bypassing a portion of the engine exhaust gases around the turbine wheel. In this manner a portion of the exhausted gases is prevented from driving the turbine wheel so that the turbine wheel rotates at less than maximum speed such that the compressor wheel is also driven less than maximum speed. Structurally, some of these bypass devices comprise a bypass passage integrally cast as part of the housing, along with a bypass or wastegate valve mounted within this bypass passage.

JP-A 57/99 234 (Hitachi) discloses a turbo charger which has an air supply pipe extending between the engine air intake manifold and a chamber with a diaphragm. At high boost pressure the intake air displaces the diaphragm and the resulting movement moves a link-rod that opens a valve in a waste gate duct. The by-pass valve appears to be biased by a ring to the closed position. The turbocharger has an electrical override of the movement of the valve by the intake air in that a solenoid may be energised by a control circuit so as to open the by pass valve regardless of the boost pressure. Thus, it appears that the electrical device is only capable of opening the by pass valve and is not able to prevent movement of the actual rod or the valve at any given position.

With the advent of digital electronic controls for controlling the operation of an internal combustion engine, a variety of fast response control signals responsive to a variety of engine operating parameters are fed to a primary electronic control unit which develops electronic control systems for adjusting, for example, fuel flow, spark advance and timing, as well as a variety of other engine operating control systems. Yet most wastegate controls include pneumatic actuators responsive to engine pressure such as intake manifold pressure.

In automotive applications, it is important that the control system for a turbocharger be relatively simple, economical and, importantly, quite rugged for the relatively extreme environment presented by the turbocharger system.

It is an object of the present invention to provide a control for turbochargers which is quite simple and rugged in design, yet is capable of using electronic control signals for rapid, accurate turbocharger control.

According to the invention, there is provided a turbocharger system for an engine, including a turbine driven by the engine exhaust gas; a wastegate duct for carrying exhaust gas bypassing the turbine; a wastegate valve in the wastegate duct to modulate the exhaust gas flow through the turbine; an actuator arranged to operate the wastegate valve; and biasing means engaging the actuator and arranged to urge the valve towards a fully closed position against the exhaust gas pressure in the wastegate duct; an electrical control device opereable to override the forces exerted by the exhaust gas pressure and the biasing means to hold the actuator stationary in a fully open position and means for generating an electrical control signal corresponding to an engine operating parameter, the control device being operable in response to the control signal; characterised in that the control device includes an electrically controlled engagement element to engage the actuator and to hold the actuator rigidly in various positions between the fully open and fully closed positions.

Preferably, the engine operating parameter is the discharge pressure from a compressor driven by the turbine.

Thus, the present invention may be considered to provide an improved wastegate control apparatus and method in which a wastegate valve which is normally positioned by the opposing forces of a spring bias and the force of the pressure of engine exhaust gas flow, is responsive to an electronic control system signal to lock the wastegate valve in any position in manner overriding the actuating forces acting thereon.

Preferably, the control device includes a solenoid having an armature which constitutes the engagement element, the armature engaging and disengaging the actuator upon energisation and de-energisation of the solenoid. Thus, the electrically energisable control device may have a member movable into locking engagement with an actuator rod upon energisation of the control device to hold the rod and valve in position against the opposing forces of a spring and the pressure of gas flow, in the wastegate duct, the member being released from locking engagement with the rod upon de-energisation of the control device to permit the valve to move in response to the opposing forces.

The actuator may be a linearly movable rod mounted relative to the turbocharger housing and connected to the wastegate valve for moving it between an open and a closed position. Preferably, a spring extends between the housing and a flange on the rod and urges the rod to move the valve towards the closed position.

Preferably, the actuator includes a rod having a plurality of grooves and the armature is movable into one of the grooves to lock the rod upon energisation of the solenoid. Alternatively, the actuator may include a rod having a plurality of teeth on the outer surface of a portion of the actuator rod, and the armature has an end with teeth for mating, locking interengagement with the teeth of the actuator rod upon energisation of the solenoid.

In another preferred embodiment, there may be frictional material secured to one end of the armature for frictional, locking engagement with the actuator upon energisation of the solenoid.

In another preferred embodiment, the control device includes an electrical stepper motor and a ratchet wheel which constitutes the engagement element, the ratchet wheel being driven by the motor and having ratchet teeth about its periphery, the actuator rod having a plurality of lands and grooves for lockably receiving one of the ratchet teeth, the stepper motor upon energisation effecting locking engagement of the rachet teeth with the actuator.

In summary, a preferred embodiment of the invention contemplates a turbocharger method and apparatus wherein the turbocharger housing adjacent the turbine wheel presents a bypass passage, and there is included a wastegate valve within such passage to modulate the bypass flow therethrough to control turbine speed and thus turbocharger operation; the pressure of the engine exhaust gas tends to open the valve, while a spring bias opposes the exhaust gas pressure to tend to close the valve; an actuator rod is secured to the valve for positioning the latter; control means responsive to an electronic control signal, are electrically energisable to act as brake for clamping the actuator rod to hold the wastegate valve in its present position and prevent further movement thereof in response to the engine exhaust gases pressure or the spring bias pressure; upon deenergisation of the electrical control, the actuator rod is released to permit movement of the wastegate valve in response to the engine exhaust gas pressure and the spring bias.

In this manner the present invention may provide a highly simplified electronic control for adjusting wastegate valve position.

Another important advantage of the present invention is that it provides an improved electronic wastegate control system and method which, in the event of electrical failure, provides safe turbocharger operation at a somewhat degraded performance level so as to protect the overall engine system.

According to another aspect of the invention, there is provided a turbocharager having an exhaust gas driven turbine, a duct for carrying exhaust gas in bypassing, nondriving relationship to the turbine, and a valve in the wastegate duct for modulating flow of exhaust gas therethrough to control turbine speed; an actuator operably associated with the valve for moving the latter; biasing means operably engaging the actuator for urging the valve toward a closed position, the valve arranged such that the pressure of the exhaust gas in wastegate duct urges the valve towards an open position; signal means for generating an electrical control signal; and control means responsive to the signal means for engaging the actuator, the control means operable to hold the actuator and the valve relatively stationary upon engaging the actuator.

Alternatively, there may be provided an electrically energisable control brake movable to a position relatively rigidly engaging said actuator rod to prevent movement of said rod and said valve upon energisation of said control brake, said control brake upon being deenergised permitting movement of said rod and said valve.

According to another aspect of the invention, there is provided a method for adjusting the speed of a turbine of an exhaust gas driven turbocharger, comprising the steps of: directing motive exhaust gas flow in parallel relationship to the turbine and to a wastegate duct bypassing the turbine; modulating exhaust gas flow through the wastegate duct by variably positioning a wastegate valve therein; utilising the pressure of exhaust gas flow to urge the wastegate valve towards a fully open position; spring biasing an actuator attached to the wastegate valve in a direction urging the wastegate valve towards a fully closed position; generating an electrical control signal responsive to a preselected engine operating parameter; and energising and deenergising a control mechanism in response to the electrical control signal to respectively lock the actuator and wastegate valve against movement by the opposing forces of the exhaust gas pressure and the spring bias, and release the actuator for movement in response to the opposing forces.

Alternatively, the last-mentioned step may comprise overriding the forces exerted by the exhaust gas pressure and the spring bias and rigidly holding the actuator and wastegate valve against movement in response to said electrical control signal. In such a case, the overriding step may include energising a solenoid in response to the electrical signal to drive an armature of the solenoid into locking engagement with the actuator.

According to a preferred embodiment of the invention, there may be provided a turbocharger comprising: a turbine adapted to be rotatably driven by exhaust gas flow from an engine; a compressor rotatably driven by the turbine and adapted to deliver pressurised airflow to the engine; housing means for defining a turbine gas inlet and outlet to direct gas flow to and from the turbine, and for defining a compressor air inlet and outlet to direct airflow to and from the compressor, the housing means further defining a wastegate passage interconnecting the turbine gas inlet and outlet in bypassing relation to the turbine; a valve in the wastegate passage for modulating the volume of gas flow therethrough in bypassing relation ot the turbine, the valve arranged such that the pressure of gas flow in the turbine gas inlet urges the valve towards an open position; an actuator operably engaging the balbe for moving the latter; biasing means operably engaging the actuator for urging the valve towards a closed position; means for generating an electrical control signal e.g. in response to an engine operating parameter; and control means responsive to the electrical control signal for engaging and disengaging the actuator, the control means operable upon engaging the actuator to override the urgings of the biasing means and turbine inlet pressure and hold the actuator and the valve stationary.

The invention may be carried into practice in various ways and some embodiments will now be described by way of example with reference to the accompanying drawings in which:

Figure 1 is a schematic diagram of a turbocharger controlled in accordance with the present invention;

Figure 2 is a side elevational view of the turbine and control, with portions shown in cross-section to reveal internal details of construction, and with other portions shown schematically;

Figure 3 is a graphical plot of intake manifold boost pressure versus engine speed;

Figure 4 is a vertical cross-sectional view of an alternative embodiment of the control device of the present invention; and

Figure 5 is a perspective view of another embodiment of the invention.

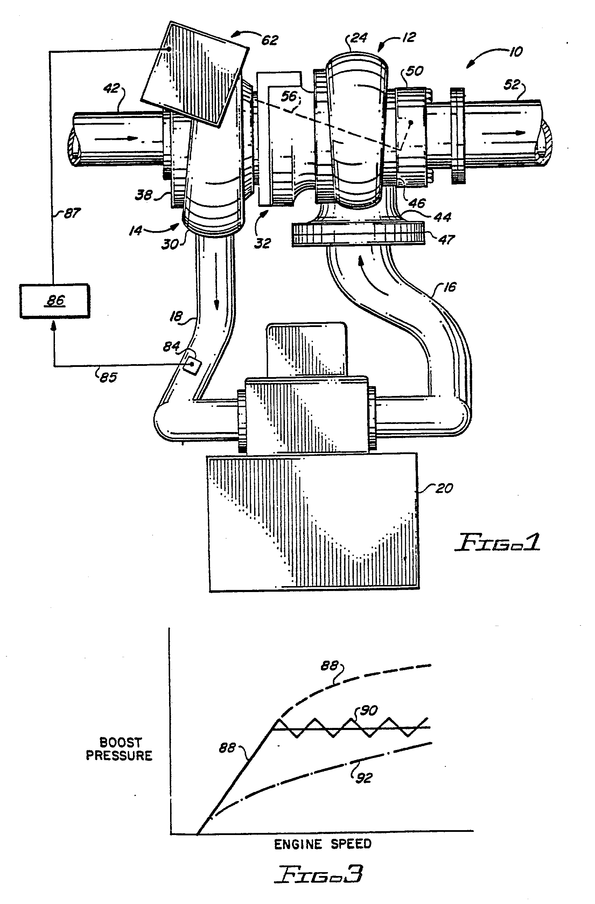

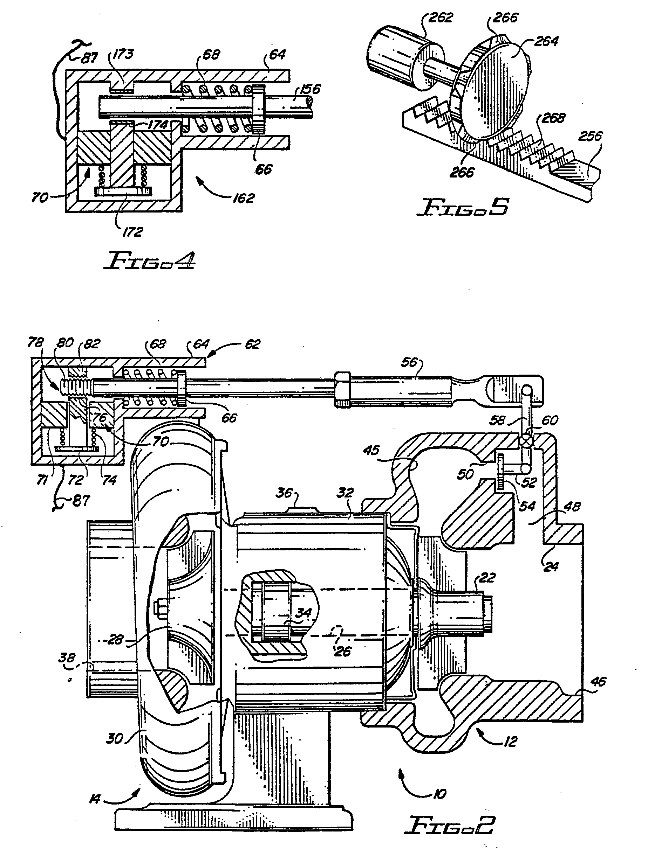

Referring now more particularly to Figures 1 and 2, a turbocharger 10 generally comprises a turbine 12 and compressor 14 coupled to the exhaust gas manifold 16 and air intake manifold 18, respectively, of an internal combustion engine 20. The turbine comprises the turbine wheel 22 positioned within a generally scroll shaped turbine housing 24, and mounted for simulataneous rotation on a common shaft 26 with a compressor wheel 28 carried within a compressor housing 30. The turbine housing 24 and the compressor housing 30 are mounted on opposite ends of a centre housing assembly 32 which includes bearings 34 for supporting the common shaft 26. Conveniently, oil ports 36 are provided in the centre housing assembly 32 for facilitating location of the bearings 34 and shaft 26.

The compressor housing 30 also includes an air inlet 38 through which ambient air is drawn axially into the compressor housing 30 upon rotation of compressor wheel 28. The compressor wheel 28 compresses and pressurises the incoming air, and discharges this compressed air to the air intake manifold 18 of the engine, thus, the compressor 14 supplies the engine with charge air at an elevated pressure.

The compressor wheel 28 is rotatably driven by the turbine wheel 22, which is in turn driven by exhaust gas discharging from the engine 20. More specifically, the turbine housing 24 includes an exhaust gas inlet 44 and exhaust gas outlet 46, which are in communication within the turbine housing 24. The exhaust gas inlet 44 is coupled to the exhaust gas manifold 16 of the engine 20 so that hot exhaust gases expelled from the engine pass through the turbine housing gas inlet 44 and impinge upon the blades of the turbine 22 to drive it rotatably. Exhaust gases leave the turbine housing 24 in a generally exial direction through the exhaust gas outlet 46 for subsequent passage to any suitable exhaust gas system 52 for the engine.

As most clearly illustrated in Figure 2, the turbine portion of housing 24 further includes a bypass passage 48 extending between the exhaust gas outlet 46 and the scroll portion 45 of the exhaust gas inlet. The bypass passage 48 communicates with the inlet scroll 45 via a bleed hole 50. Within the bypass passage 48 there is a turbine bypass or wastegate valve 52 provided for controllably opening and closing the bleed hole 50 to control by bypassing of exhaust gases around the turbine wheel 22. The illustrated form of valve 52 comprises a substantially flat, circular valve head 54 with a larger diameter than the bleed hole 50.

Associated with the valve 52 is a linearly movable actuator rod 56 having one end connected to a suitable linkage for moving the valve 52. The illustrated form of this linkage includes a lever 58 having opposed arms respectively attached to the valve 52 and the end of the rod 56, the lever 58 being pivotally secured to the housing 24 as schematically illustrated at a pivot point 60.

The opposite end of the actuator rod 56 is movably received within a control device 62 having a housing 64 secured to the compressor housing 30. The control device 62 is preferably located adjacent the compressor portion of the turbocharger 10 to minimise the high temperature environment to which it is exposed. A biasing means in the form of a helical coil compression spring 68 extends between the housing 64 and a raised land 66 on the actuator rod 56. The spring 68 exerts a biasing force urging the actuator rod 56 in a direction which moves the valve 52 towards a closed position interrupting fluid flow through the bypass passage 48.

The control device 62 includes an electrically energisable solenoid 70 having a winding 71 and central armature 72. A spring 74 lightly preloads the armature 72 towards the position illustrated in Figure 2. One end of the armature has a serrated configuration presenting a plurality of teeth, or lands and grooves 76.

The end portion 78 of actuator rod 56 is also configured with a plurality of lands and grooves on its outer periphery, presenting teeth 80 complementally arranged to those at the end 76 of the armature 72. The teeth 80 extend over a significant length of the rod 56 so that within the limit of travel of the actuator 56, teeth 80 will always be presented in general alignment with the complementally configured end 76 of the armature 72. A stem 82 having a complementally configured teeth arrangement of teeth in general alignment with the end 76 of the armature 72 may be included at the side of the actuator rod 56 opposite that of the armature 72.

Upon energisation of the winding 70 by an appropriate electrical signal, the armature 72 is moved so that its end 76 comes into locking engagement with the end 78 of the actuator rod 56. In conjunction with the stem 82, this effectively locks the actuator rod 56 in position, overriding the forces of the spring 68 and the pressure of the gas in the inlet scroll 45 in tending to move the valve 52.

As shown in Figure 1, a pressure-to-electrical transducer 84 is disposed in the engine intake manifold and/or discharge portion of the compressor housing 30 to sense the intake manifold pressure. This engine operating parameter is transformed into an electrical signal transmitted by a line 85 to an electrical control unit 86. The electrical control unit 86 may be common with that used with the internal combustion engine to control a variety of engine operating parameters. An electrical control signal from the electrical control unit is transmitted to energise and de-energise the control device solenoid 70 via a line 87.

In operation, upon engine start the bias of the spring 68 maintains the wastegate valve in a closed position. As the engine develops power the pressure in the intake manifold 18 remains less than the desired boost pressure. The sensor 84 therefore generates a signal through the electronic control unit 86 to energise the solenoid 70 and shift the armature 72 into a locking relationship with the actuator 56. Thus, the wastegate valve 52 is locked in a closed position.

Engine exhaust from the manifold 16 is directed into the turbine gas inlet 44 and the inlet scroll 45 to drive the turbine 22. The gases subsequently exhaust through the outlet 46. Rotation of the turbine 22 causes the compressor 28 to compress and pressurise air being delievered to the intake manifold 18. With the wastegate valve 52 closed, the intake manifold pressure or boost pressure in the manifold 18 follows a curve 88 illustrated in Figure 3.

Once preselected, desired boost pressure is reached and sensed by the transducer 84, a control signal from the electronic control unit 86 de-energises the solenoid 70. The armature releases the actuator 56 to allow movement of the wastegate valve 52. The pressure differential between the inlet scroll 45 and the exhaust passage 46 is such that a force is exerted on the wastegate valve 52 to move it towards a fully open position; i.e. in a direction uncovering the bleed hole 58 to permit bypass flow through the passage 48.

The resulting reduction in exhaust gas motive flow across the turbine 22 reduces the kinetic energy being imparted thereto, and accordingly rapidly reduces the kinetic energy imparted by the compressor 28 to the air being delivered to the intake manifold 18. The intake manifold pressure promptly begins to decrease. In response, the transducer 84 generates an appropriate signal through the electrical control unit 86 to energise again the solenoid 70 to shift the armature 72 into locking engagement with the actuator 56. As a result the actuator 56 is locked in a slightly open position.

This process continues with the solenoid 70 being energised and de-energised as the boost pressure sensed by the transducer 84 varies in very close proximity to the preselected, desired boost pressure. Consequently, the control system thereby controls the boost pressure to the desired preselected level as illustrated by a curve 90 in Figure 3, in which a small fluctuation in pressure is shown in exaggerated schematic form.

It will therefore be seen that the control device 62 acts as an electrically operated control brake which holds the wastegate 52 in a closed position until the desired boost pressure is reached. The sensor 84 detects this pressure and the electronic control unit 86 sends a signal to the control device 62 to release the control rod 56. By virtue of the pressure in the scroll 45, the wastegate valve 52 will then open causing the boost pressure to drop. When the boost pressure drops below a set value the control device 62 is again reactivated to hold the wastegate in a fixed position. This causes the boost pressure to rise again until the desired, preselected control pressure is reached. In this manner the boost pressure can be controlled electronically at any desired level between the curves 88 and 92 illustrated in Figure 3. The curve 88 illustrates the boost pressure that would be developed should the wastegate valve 52 never be opened, while the curve 92 illustrates the boost pressure which would be permitted in the event that the spring 68 alone is controlling the boost pressure in opposition to the pressure in scroll 45.

From the foregoing it will also be apparent that in the event of failure, for example an electronic power failure, the solenoid 70 is de-energised and so releases the actuator rod 56. As a result, the actuator rod 56 will be continually positioned solely by the opposing forces exerted by the spring 68 and the pressure in the scroll 45. The boost pressure is thereby controlled downwardly to the curve 92 of Figure 3. Accordingly, in the event of failure, the engine is protected and a certain amount of boost pressure, perhaps degraded from the desired characteristics, is still available for improved engine opeation.

An alternative embodiment of the control device 62 is shown in Figure 4. The control device designated 162 again includes a housing 64 preferably secured to the compressor housing, which movably receives the end portion of the actuator rod 56. Again, the spring 68 acts via the flange 66 to urge the rod 56 to move the wastegate valve 52 to a closed position.

In the Figure 4 arrangement, the end of the armature 172 engages a non-grooved actuator rod 156 but is provided with a pad of high frictional material 174. Preferably, an opposing stem 173 is also provided with a high frictional pad. Once the solenoid 70 is energised, the armature 172 is moved and the friction pad 174 firmly clamps the actuator rod 156, locking it in its position.

A further embodiment of the control device 62 is shown in Figure 5. The control device in Figure 5 comprises an electrical stepper motor 262 whose structure, function and operation are well known in the art. The stepper motor 262 includes a ratchet wheel 264 having teeth 266 on its outer periphery which are selectively engageable with grooves 268 on the outer surface of the actuator rod 256. Again, upon energisation of the motor 262, the ratchet wheel is rotatably stepped such that one of its teeth engages a mating groove 268 on the actuator rod to lock the latter. A further stepping of motor 262 shifts the tooth 266 away from the groove 268 to permit unencumbered axial movement of the actuator rod 256.

From the foregoing it will be apparent that the present invention may provide an improved method for adjusting the speed of a turbine of an exhaust gas driven turbocharger in which motive gas flow is directed in parallel relationship both to the drive turbine and to a wastegate duct or passage which bypasses the turbine. The method includes the steps of modulating an exhaust gas flow through this wastegate or bypass duct by variably positioning the wastegate valve 52. The pressure of the exhaust gas flow in the scroll 45 urges the wastegate valve 52 towards a fully open position while the bias of the spring 68 acts upon the actuator 56 to urge the wastegate valve 52 towards a fully closed position. The method further includes the steps of generating an electrical control signal responsive to a preselected engine operating parameter such as a particular intake manifold boost pressure, and the step of overriding the forces exerted by the exhaust gas pressure and the spring bias to hold the actuator rigidly and the wastegate valve against movement, all in response to the electrical control signal.

## Claims

1. A turbocharger system (10) for an engine (20), including a turbine (12) driven by the engine exhaust gas; a wastegate duct (48) for carrying exhaust gas bypassing the turbine (12); a wastegate valve (52) in the wastegate duct (48) to modulate the exhaust gas flow through the turbine (12); an actuator (56) arranged to operate the wastegate valve (52); and biasing means (68) engaging the actuator (56) and arranged to urge the valve (52) towards a fully closed position against the exhaust gas pressure in the wastegate duct (48); an electrical control device (62) operable to override the forces exerted by the exhaust gas pressure and the biasing means (68) to hold the actuator (56) stationary in a fully open position and means (86) for generating an electrical control signal corresponding to an engine operating parameter, the control device (62) being operable in response to the control signal; characterised in that the control device (62) includes an electrically controlled engagement element to engage the actuator and to hold the actuator rigidly in various positions between the fully open and fully closed positions.

2. A system as claimed in Claim 1 characterised in that the engine operating parameter is the discharge pressure from a compressor (14) driven by the turbine (12).

3. A system as claimed in any preceding claim characterised in that the control device (62) includes a solenoid (70) having an armature (72) which constitutes the engagement element, the armature engaging and disengaging the actuator (56) upon energisation and de-energisation of the solenoid (70).

4. A system as claimed in Claim 3 characterised in that the actuator (56) includes a rod (78) having a plurality of grooves (80) and the armature (72) is movable into one of the grooves to lock the rod (78) upon energisation of the solenoid (70).

5. A system as claimed in Claim 3 characterised in that the actuator (56) includes a rod having a plurality of teeth (80) on the outer surface of a portion (78) of the actuator rod, and the armature (72) has an end (76) with teeth for mating, locking interengagement with the teeth of the actuator rod upon energisation of the solenoid (70).

6. A system as claimed in Claim 3 characterised by frictional material (174) secured to one end of the armature (172) for frictional, locking engagement with the actuator (56) upon energisation of the solenoid (70).

7. A system as claimed in Claim 1 or Claim 2 characterised in that the control device (62) includes an electrical stepper motor (262) and a ratchet wheel which constitutes the engagement element, the ratchet wheel (264) being driven by the motor (262) and having ratchet teeth (266) about its periphery, the actuator rod (256) haaving a plurality of lands and grooves (268) for lockably receiving one of the ratchet teeth (266), the stepper motor (262) upon energisatieon effecting locking engagement of the ratchet teeth (266) with the actuator (256).

## Patentansprüche

1. Turboladersystem (10) für einen Motor (20), mit einer durch die Motorabgase angetriebenen Turbine (12), mit einem Verlustauslaßkanal (48) für das Vorbeiführen von Abgas an der Turbine (12), mit einem Verlustauslaßventil (52) im Verlustauslaßkanal (48), um den Abgasstrom durch die Turbine (12) zu regulieren, mit einem Stellglied (56) für die Betätigung des Verlustauslaßventils (52), und mit Vorspannorganen (68), die an dem Stellglied (56) angreifen, um das Ventil (52) entgegen dem Abgasdruck in dem Verlustauslaßkanal (48) in die volkommen geschlossene Stellung zu drängen, mit einer elektrischen Steuereinrichtung (62), die betätigbar ist, die durch den Abgasdruck und das Vorspannorgan (68) ausgeübte Kräfte zu überlagern un das Stellglied (56) in einer voll offenen Stellung stationär zu halten, und mit Mitteln (86) zur Erzeugung eines elektrischen Steuersignals entsprechend den Betriebsparametern des Motors, wobei die Steuereinrichtung (62) in Abhängigkeit vom Steuersignal betätigbar ist, dadurch gekennzeichnet, daß die Steuereinrichtung (62) ein elektrisch gesteuertes Eingriffselement für den Eingriff in das Stellglied und das starre Festhalten des Stellgliedes in verschiedenne Stellungen zwischen vollständig offen und vollständig geschlossen aufweist.

2. System nach Anspruch 1, dadurch gekennzeichnet, daß der Betriebsparameter der Ausgangsdruck eines durch die Turbine (12) angetriebenen Kompressors (14) ist.

3. System nach einem der vorhergehenden Ansprüche, dadurch gekennzeichnet, daß die Steuereinrichtung (62) ein Solenoid (70) mit einem Anker (72) umfaßt, der das Eingriffselement bildet, wobei der Anker in das Stellglied (56) eingreift, bzw. außer Eingriff kommt, wenn aus Solenoid (70) mit Energie beaufschlagt bzw. die Energieversorgung eingestellt wird.

4. System nach Anspruch 3, dadurch gekennzeichnet, daß das Stellglied (56) eine Stange (78) mit einer Mehrzahl von Rillen (80) aufweist, wobei der Anker (72) in eine der Rillen bei Energiebeaufschlagung des Solenoids (70) zur Festlegung der Stange (78) hineinbewegbar ist.

5. System nach Anspruch 3, dadurch gekennzeichnet, daß das Stellglied (56) eine Stange mit einer Mehrzahl von Zähnen (80) an der äußeren Oberfläche eines Abschnittes (78) auf der Stellgliedstange, wobei der Anker (72) ein Ende mit Zähnen für das Paaren und sperrende Zusammenwirken mit den Zähnen der Stellgliedstange bei Energiebeaufschlagung des Solenoids (70) aufweist.

6. System nach Anspruch 3, gekennzeichnet durch ein Reibungsmaterial (174), das auf einem Ende des Ankers (172) für ein reibschlüssiges, sperrendes Angreifen am Stellglied (56) bei Energiebeaufschlagung des Solenoids (70) aufgebracht ist.

7. System nach Anspruch 1 oder 2, dadurch gekennzeichnet, daß die Steuereinrichtung (62) einen elektrischen Schrittschaltmotor (262) und ein das Eingriffselement bildendes Schaltrad aufweist, wobei das Schaltrad (264) durch den Motor (262) angetrieben ist und Schaltzähne (266) an seiner Peripherie aufweist, wobei die Stellgliedstange (256) eine Mehrzahl von Stegen und Rillen (268) für die sperrende Aufnahme eines des Schaltzähne (266) aufweist, wobei der Schrittschaltmotor (262) bei Energiegeaufschlagung das sperrende Eingreifen der Schaltzähne (266) in das Stellglied (256) bewirkt.

## Revendications

1. Système turbocompresseur (10) pour un moteur (20) comprenant une turbine (12) entraînée par les gaz d'échappement du moteur; un conduit de décharge (48) pour les gaz d'échappement contournant la turbine (12); une soupape de décharge (52) dans le conduit de décharge (48) pour moduler le flux de gaz d'échappement traversant la turbine (12); un actionneur (56) propre à actionner la soupape de décharge (52), et un moyen de rappel élastique (68) attaquant l'actionneur (56) et rappelant la soupape (52) vers une position de fermeture complète à l'encontre de la pression des gaz d'échappement dans le conduit de décharge (48); un dispositif de commande électrique (62) propre à annuler l'effet des forces exercées par la pression des gaz d'échappement et le moyen de rappel élastique pour retenir l'actionneur (56) immobile dans une position d'ouverture complète, et un moyen (86) pour produire un signal électrique de commande correspondant à un paramètre de fonctionnement de moteur, le dispositif de commande (62) pouvant intervenir en réaction au signal de commande, caractérisé en ce que le dispositif de commande (62) comprend un élément d'engagement commandé électriquement pour engager l'actionneur afin de le retenir rigidement dans diverses positions entre la position d'ouverture complète et la position de fermeture complète.

2. Système suivant la revendication 1, caractérisé en ce que le paramètre de fonctionnement du moteur est la pression de refoulement d'un compresseur (14) entraîné par la turbine (12).

3. Système suivant l'une ou l'autre des revendications précédentes, caractérisé en ce que le dispositif de commande (62) comprend un solénoïde (70) comportant une armature (72) qui constitue l'élément d'engagement, l'armature engageant et désengageant l'actionneur (56) lors de l'excitation et de la désexcitation du solénoïde (70).

4. Système suivant la revendication 3, caractérisé en ce que l'actionneur (56) comprend une tige (78) comportant plusieurs gorges (80) et l'armature (72) peut être engagée dans une des gorges pour bloquer la tige (78) lorsque le solénoïde (70) est excité.

5. Système suivant la revendication 3, caractérisé en ce que l'actionneur (56) comprend une tige dont une partie (78) de la surface extérieure présente plusieurs dents (80) et l'armature (72) comporte une extrémité dentée (76) propre à venir en prise de blocage avec les dents de la tige d'actionnement lorsque le solénoïde (70) est excité.

6. Système suivant la revendication 3, caractérisé en ce qu'un matériau de friction (174) est fixé à une extrémité de l'armature (172) en vue de venir en contact de blocage par friction avec l'actionneur (56) lorsque le solénoïde (70) est excité.

7. Système suivant la revendication 1 ou 2, caractérisé en ce que le dispositif de commande (62) comprend un moteur électrique pas à pas (262) et une roue d'encliquetage qui constitue l'élément d'engagement, la roue d'encliquetage (264) étant entraînée par le moteur (262) et comportant des dents (266) autour de sa périphérie, la tige d'actionnement (256) comportant plusieurs mervures et rainures (268) destinées à recevoir, à des fins de blocage, une des dents d'encliquetage (266), le moteur pas à pas (262), lorsqu'il est sous tension, assurant l'engagement de blocage des dents d'encliquetage (266) avec l'actionneur (256).

*Fig.1*

BOOST
PRESSURE

ENGINE SPEED

*Fig.3*

FIG.4

FIG.5

FIG.2